# EUROPÄISCHE PATENTSCHRIFT

(11) **EP 1 179 472 B1**
(45) Veröffentlichungstag und Bekanntmachung des Hinweises auf die Patenterteilung: **19.01.2005**
(21) Anmeldenummer: 01119048.5
(22) Anmeldetag: 07.08.2001
(51) Int. Cl.: B64D 9/00

(54) **Frachtladesystem**
Cargo loading system
Système de chargement de fret pour avion

(30) Priorität: 11.08.2000 DE 10039365; 01.09.2000 DE 10043180
(43) Veröffentlichungstag der Anmeldung: 13.02.2002
(73) Patentinhaber: Telair International GmbH, 83714 Miesbach (DE)
(72) Erfinder: Huber, Thomas, 83727 Schliersee (DE)
(74) Vertreter: Bohnenberger, Johannes, Dr.

(56) Entgegenhaltungen:
- DE-A- 19 501 562
- GB-A- 2 043 584
- US-A- 5 011 348

## Beschreibung

Die Erfindung betrifft ein Frachtladesystem zum Beladen eines Frachtdecks in einem Frachtraum eines Flugzeugs.

Derartige Ladesysteme sind notwendig, um Paletten, Container oder dergleichen genormte Frachtbehälter in einem Flugzeug so zu verstauen, dass der Stauvorgang schnell und sicher vor sich geht. Mit sicher ist hierbei insbesondere gemeint, dass die Frachtbehälter in ihrer endgültigen Position innerhalb des Frachtraumes so fixiert gehalten sind, dass sie nicht wandern können. Dabei muß das System sehr leicht bedienbar, um nicht zu sagen, "idiotensicher" sein, da gut ausgebildetes Frachtpersonal oftmals nicht zur Verfügung steht.

Ein weiteres, hier insbesondere zu behandelndes Problem liegt darin, dass trotz der obigen Anforderungen das Frachtladesystem nicht beliebig aufwendig gestaltet sein kann, da im Luftfrachtverkehr jedes Gramm zählt. Schließlich bringen aufwendige Frachtladesysteme auch noch das Problem mit sich, dass mit der Teilezahl die Wahrscheinlichkeit von Störfällen steigt.

Quer- und Längsriegel sind zum Fixieren der Frachtbehälter beispielsweise aus der DE 198 54 189 oder DE 198 08 659 bekannt. Montagebahnen mit darin angebrachten Rollenantriebseinheiten sind beispielsweise aus der DE 197 22 468.7 bekannt.

Aus der GB-A-2 043 584 ist ein Ladesystem für einen Frachtraum eines Flugzeugs bekannt, das Stützrollen zum Abstützen der Frachtbehälter und zum Fördern entlang einer Längsachse des Frachtraums und des Flugzeugs, Rollenantriebseinheiten zum Antreiben der Frachtbehälter, Querriegel zum Befestigen und Verriegeln der Frachtbehälter quer zur Längsachse, Längsriegel zum Befestigen und Verriegeln von Frachtbehältern in Richtung der Längsachse sowie Montagebahnen zum Montieren der Stützrollen und der Längsriegel aufweist. Weiterhin sind eine mittlere Reihe von Querriegeln und erste sowie zweite Reihen von randseitigen Querriegeln vorgesehen, die an den beiden äußeren Rändern des Frachtdecks montiert sind. Die Anordnung ist derart getroffen, dass entweder Großfrachtbehälter zwischen den randseitigen Querriegeln oder aber kleinere Frachtbehälter zwischen den mittleren und jeweils einer randseitigen Reihe von Querriegeln fixierbar sind. Bei diesem Ladesystem wird es als nachteilig angesehen, dass in den Bereichen, in denen eine Verengung des Frachtraums vorliegt, gesonderte Verriegelungseinrichtungen für die genormten Container vorgesehen werden müssen.

Der Erfindung liegt die Aufgabe zu Grunde, ein Ladesystem zum Beladen eines Frachtdecks in einem Frachtraum eines Flugzeugs dahin gehend aufzuzeigen, dass ein variables und sicheres Verstauen mit einfachen Mitteln erzielbar ist.

Diese Aufgabe wird durch ein Ladesystem gemäß Anspruch 1 gelöst.

Ein wesentlicher Punkt der Erfindung liegt darin, dass mit einer minimierten Anzahl von Transport- und Befestigungselementen in exakt definierten Reihenanordnungen eine maximale Anzahl von Stau-Möglichkeiten auch dann erzielbar ist, wenn der Frachtraum beschränkt oder durch Einbauten (z.B. Aufnahmebereiche für das Fahrwerk) zumindest stellenweise eingeengt ist.

Es wird also die eingangs gestellte Aufgabe durch ein Ladesystem zum Beladen eines Frachtecks in einem Frachtraum eines Flugzeugs mit Paletten, Containern oder dergleichen genormten Frachtbehältern gelöst, welches umfasst:
Stützrollen zum Abstützen der Frachtbehälter und Fördern entlang einer Längsachse des Frachtraums und des Flugzeugs; Rollenantriebseinheiten zum Antreiben der Frachtbehälter; Querriegel zum Befestigen und Verriegeln der Frachtbehälter quer zur Längsachse;
Längsriegel zum Befestigen und Verriegeln von Frachtbehältern in Richtung der Längsachse;
zwei Paar von Montagebahnen zum Montieren mindestens von Stützrollen und Querriegeln;
eine mittlere Reihe von Querriegeln und erste und zweite Reihen von randseitigen Querriegeln, die an ersten bzw. einem gegenüberliegenden zweiten äußeren Rand des Frachtdecks montiert sind, wobei die Frachtbehälter kleinere Frachtbehälter (LD2) mit einem ersten, geringeren Quer-Befestigungsabstand und größere Frachtbehälter (LD3) mit einem zweiten, größeren Quer-Befestigungsabstand umfassen, wobei weiterhin jeweils ein paar von Montagebahnen zwischen der mittleren Reihe und der ersten bzw. zwischen der mittleren Montageschiene und der zweiten Reihe von randseitigen Querriegel montiert ist und jedes Paar von Montagebahnen eine äußere Montagebahn und eine innere Montagebahn umfasst; wobei der Abstand zwischen der äußeren Montagebahn jedes Paares und der mittleren Reihe und den jeweiligen dort montierten Querriegeln dem ersten, geringeren Befestigungsabstand entspricht, und wobei der Abstand zwischen der äußeren Montagebahn eines Paares und der inneren Montagebahn des jeweils anderen Paares und den jeweiligen dort montierten Querriegeln dem zweiten, größeren Quer-Befestigungsabstand entspricht. Man kann also mit dem so ausgebildeten Ladesystem die zwei verschiedenen üblichen Arten von Normbehältern in verschiedenster Weise befestigen, ohne dass deshalb mehr als die genannten Bahnen vorgesehen sein müssen, wodurch auch Einengungen des Laderaums überwindbar sind.

Vorzugsweise sind die äußeren Montagebahnen zur Montage von randseitigen Querriegeln ausgebildet. Dadurch wird eine maximale Platzausnutzung gewährleistet.

Der Abstand zwischen jeder Reihe von randseitigen Querriegeln und der jeweils ihr nächstliegenden inneren Montagebahn und den dort montierten Querriegeln entspricht vorzugsweise dem ersten, geringeren Befestigungsabstand. Damit kann in einem breiteren Bereich des Laderaums ein (oder zwei) schmalerer Frachtbehälter ganz am Rand des Laderaums verstaut werden.

Weiterhin ist vorzugsweise der Abstand zwischen jeder Reihe von randseitigen Querriegeln und der mittleren Reihe von Querriegeln dem zweiten, größeren Befestigungsabstand entsprechend ausgebildet. Es kann also in einem breiteren Abschnitt des Laderaums ein größerer Frachtbehälter bis zum äußersten Laderaumrand reichend verstaut bzw. dort gefördert werden.

Der Abstand zwischen jeder Reihe von randseitigen Querriegeln der ersten bzw. zweiten Reihe und der inneren Montagebahn, die dem zweiten bzw. dem ersten äußeren Rand des Frachtdecks näher liegt und den dort montierten Querriegeln ist dem zweiten, größeren Befestigungsabstand entsprechend ausgebildet. Es kann mit dieser Anordnung in einem schmaleren Bereich des Frachtraums ein größerer Frachtbehälter soweit wie nur irgend möglich am Rand verstaut werden.

Bei einer bevorzugten Ausführungsform sind die Montagebahnen zum Einbau von Rollenantriebseinheiten ausgebildet, wie dies an sich aus der DE 198 54 189 bekannt ist. Dadurch wird der Boden des Frachtraums besonders übersichtlich frei gehalten von Rollenantriebseinheiten, wodurch Verletzungs- und Beschädigungsgefahren verringert werden. Weiterhin können Bremsrollen oder Drainagesysteme zum Entwässern der Montagebahnen und/oder des Frachtdecks vorgesehen sein.

Bei einer anderen bevorzugten Ausführungsform, die auch zusätzlich Anwendung finden kann, sind im Frachtdeck Ausnehmungen zum Einbau von Rollenantriebseinheiten vorgesehen, und zwar vorzugsweise zwischen den Montagebahnen der Paare. Derartige Rollenantriebseinheiten können mit größeren Antriebsrollen zur Beförderung schwererer Frachtbehälter ausgebildet werden.

Schließlich sind die Montagebahnen vorzugsweise auch zum Montieren von Längsriegeln ausgebildet, so dass sämtliche zum Befördern und zum Fixieren der Frachtbehälter notwendige Riegel und Rollen in den Montagebahnen unterbringbar sind.

Nachfolgend werden bevorzugte Ausführungsformen der Erfindung anhand von Abbildungen näher erläutert. Hierbei zeigen:
- Fig. 1: eine Draufsicht auf ein Ladedeck,
- Fig. 2: einen Teilquerschnitt durch einen Flugzeugrumpf mit Ladedeck und dort positionierten größeren Behältern,
- Fig. 3: eine Ansicht ähnlich der nach Fig. 2, jedoch mit nur einem kleineren Behälter,
- Fig. 4: eine Ansicht ähnlich der nach Fig. 2, jedoch mit zwei kleineren Behältern,
- Fig. 5: eine Ansicht ähnlich der nach Fig. 2 mit einem größeren Behälter,
- Fig. 6: eine Seitenansicht einer Montagebahn mit dort montierten Bauteilen,
- Fig. 7: eine Ansicht entlang der Linie VII - VII aus Fig. 6,
- Fig. 8: eine Draufsicht auf den Gegenstand nach Figur 6,
- Fig. 9: einen Schnitt entlang der Linie IX - IX aus Figur 8, und
- Fig. 10: eine perspektivische Ansicht der Montagebahn nach den Figuren 6-9;
- Fig. 11: eine vergrößerte Detaildarstellung des Bereiches XI aus Fig. 4,
- Fig. 12: eine vergrößerte Detaildarstellung des Bereiches XII aus Fig. 2,
- Fig. 13: eine vergrößerte Detaildarstellung des Bereiches XIII aus Fig. 4,
- Fig. 14: eine vergrößerte Detaildarstellung des Bereiches XIV aus Fig. 4,
- Fig. 15: eine vergrößerte Darstellung des Bereiches XV aus Fig. 1,

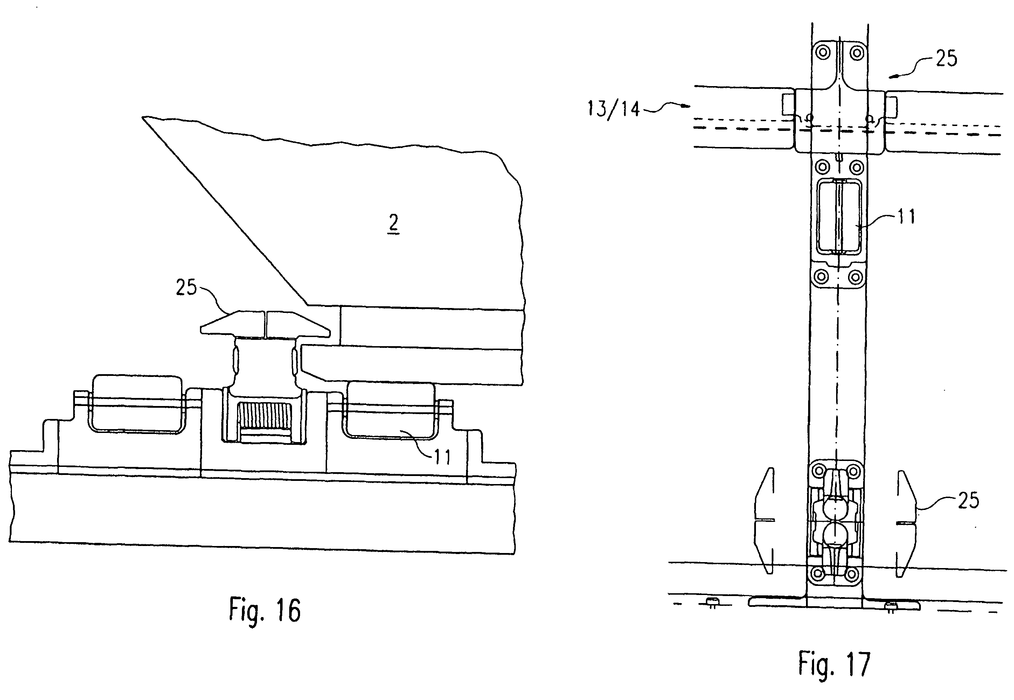

- Fig. 16: eine vergrößerte Ansicht entlang der Linie XVI-XVI aus Fig. 15,
- Fig. 17: eine vergrößerte Detaildarstellung des Bereiches XVII aus Fig. 15,
- Fig. 18: eine vergrößerte Ansicht des Bereiches XVIII aus Fig. 1,
- Fig. 19: eine vergrößerte Ansicht des Bereiches IXX aus Fig. 18 und,
- Fig. 20: eine vergrößerte Ansicht des Bereiches XX aus Fig. 15.

In der nachfolgenden Beschreibung werden für gleiche und gleich wirkende Teile dieselben Bezugsziffern verwendet.

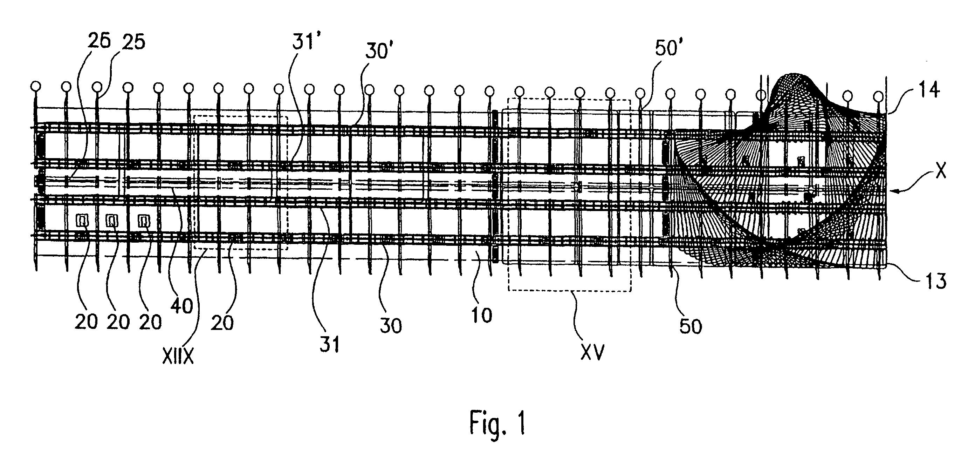

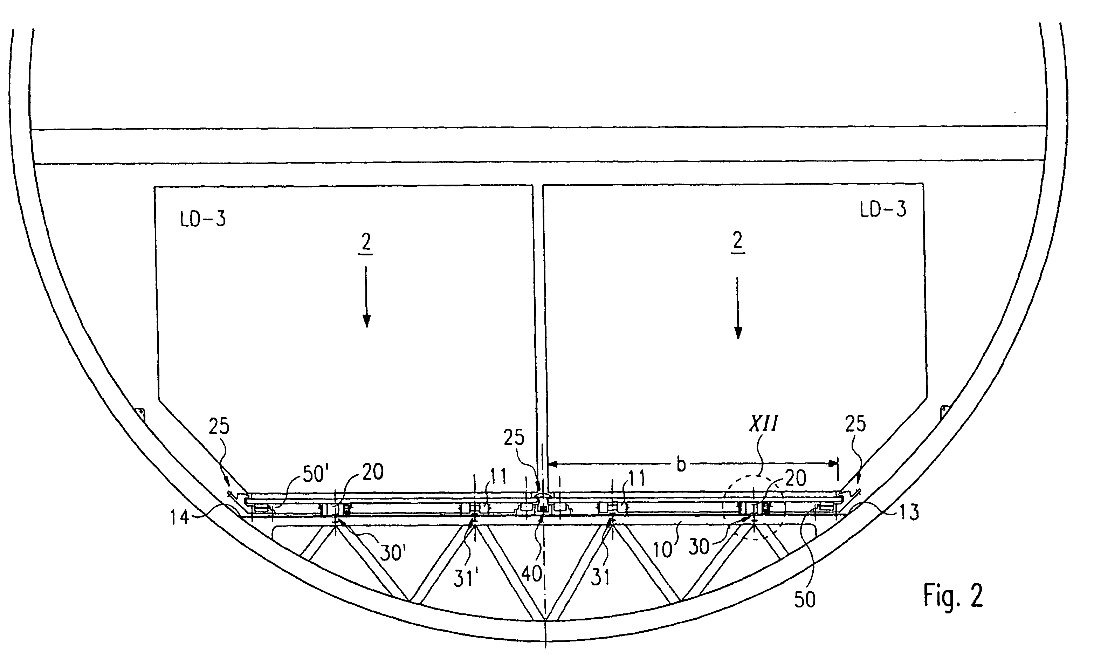

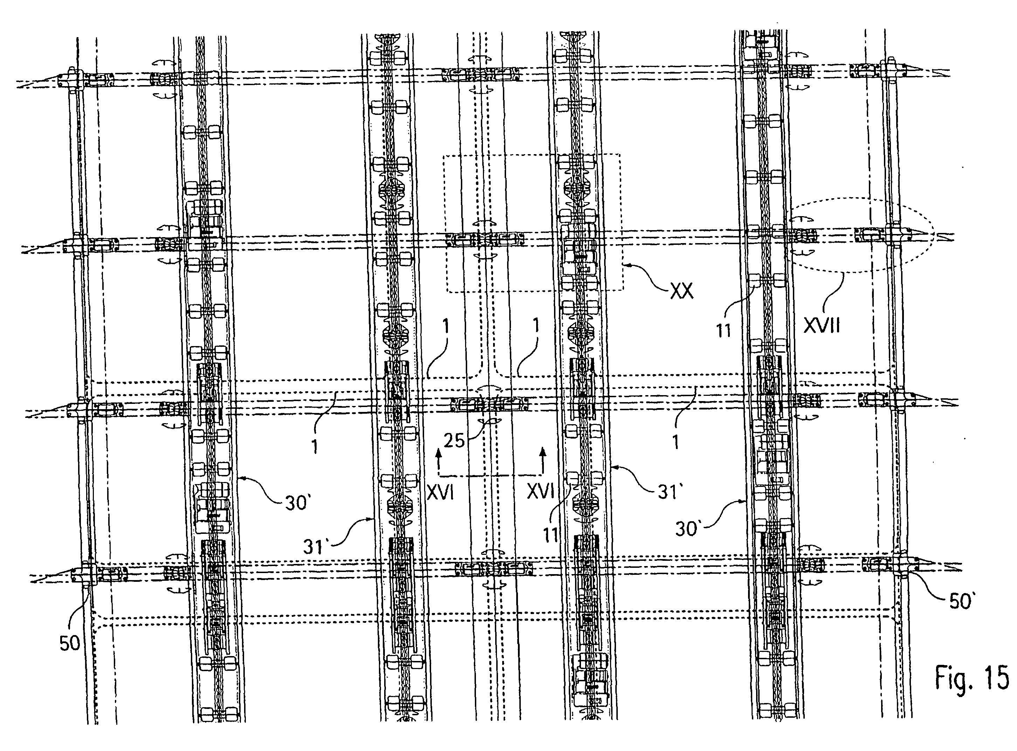

Wie aus Fig. 1 hervorgeht, sind auf bzw. in einem Frachtdeck 10 in Richtung einer Längsachse X des Frachtdecks 10 verlaufend eine mittlere Reihe 40 von Elementen (unten näher erläutert) (im wesentlichen in der exakten Mitte des Frachtdecks 10), und auf beiden Seiten von dieser jeweils ein paar von Montagebahnen, nämlich eine äußere Montagebahn 30 bzw. 30' und eine innere Montagebahn 31 bzw. 31' angeordnet. In den Montagebahnen 30, 30'; 31, 31' sowie in der mittleren Reihe 40 sind Stützrollen 11 (siehe zum Beispiel Fig. 2, 3, 10) vorgesehen, also passive Elemente, auf welchen die zu befördernden Gegenstände reibungsarm verschoben werden können. Weiterhin sind an einem ersten Rand 13 und einem zweiten Rand 14 des Frachtdecks 10 eine Reihe 50 bzw. 51 (siehe Fig. 15) von Querriegeln 25 und zusätzlich Stützrollen 10 angebracht. Derartige Querriegel 25 sind weiterhin in die Montagebahnen 30, 31; 30', 31' und in der mittleren Reihe 40 (dort im wesentlichen direkt auf das Frachtdeck bzw. die darunter liegenden Träger geschraubt) angebracht.

Zum Befördern der Gegenstände werden an sich bekannte Rollenantriebseinheiten 20 verwendet, von denen einige bei der in Fig. 1 gezeigten Ausführungsform auf der einen Seite der mittleren Reihe 40 zur besseren Verdeutlichung der Variabilität des Systems in Ausnehmungen im Frachtdeck 10 zwischen der äußeren Montagebahn 30 und der inneren Montagebahn 31 angebracht sind. Auf der anderen Seite der mittleren Montageschiene 40 sind die Rollenantriebseinheiten 20 innerhalb der äußeren Montagebahn 30' angebracht. Sie können aber alternativ oder auch zusätzlich innerhalb der inneren Montagebahn 31 bzw. 31' vorteilhafterweise angebracht sein. Hier kommt es in erster Linie darauf an, welche Art von Behältern und welche Gewichte bzw. Massen gefördert werden müssen.

In Fig. 2 ist nun ein Schnitt durch ein Flugzeug angedeutet, aus welchem hervorgeht, dass zwei größere Transportbehälter 2 mit einem größeren Befestigungsabstand b das Frachtdeck vollständig ausfüllen und dabei von den randseitigen Querriegeln 25 und von den in der mittleren Reihe 40 angebrachten Querriegeln 25 gehalten werden. Die Rollenantriebseinheiten 20 sind hierbei in den jeweils äußeren Montagebahnen 30, 30' angebracht.

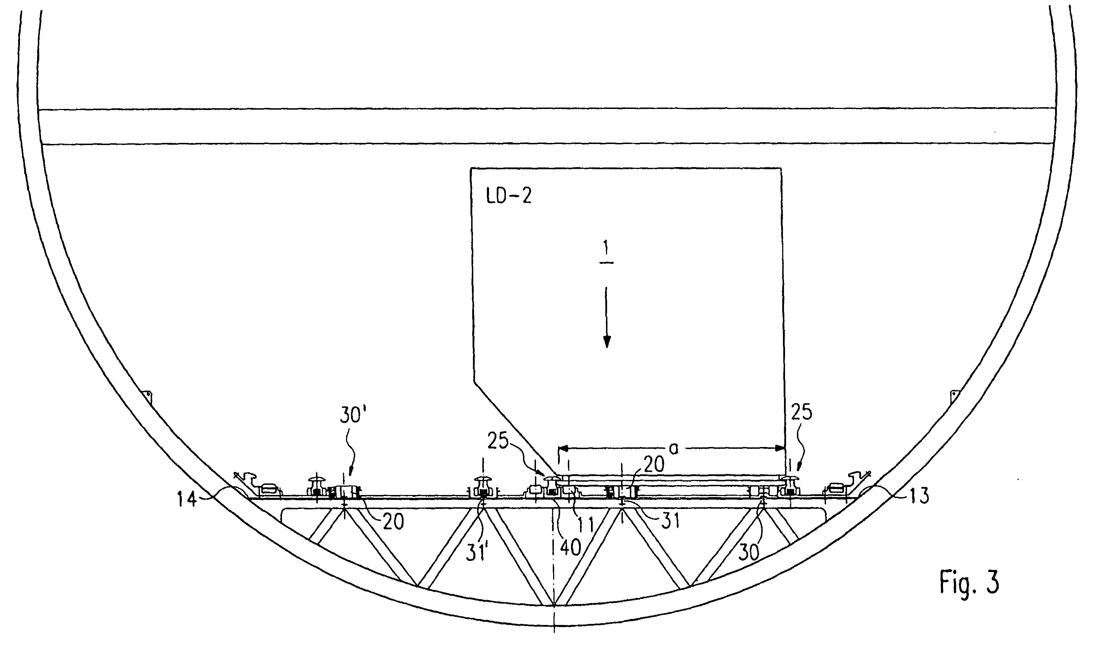

In Fig. 3 ist gezeigt, wie ein einzelner kleinerer Behälter 1 mit seinem geringeren Befestigungsabstand a gegen Quer-Verrutschung geschützt werden kann, nämlich durch Festklemmen zwischen den Querriegeln 25, die in einer äußeren Montagebahn 30 oder an ihrer Außenseite montiert sind, und Querriegeln 25 in der mittleren Reihe 40. Die Beförderung geschieht durch Rollenantriebseinheiten 20, welche sowohl in der äußeren als auch in der inneren Montagebahn 30 bzw. 31 montiert sind. Eine derartige Anordnung kann zum Beispiel dann gewählt werden, wenn zwischen dem äußeren Rand 13 bzw. 14 und den äußeren Montagebahnen 30, 30' Hindernisse, z. B. im Flugzeug montierte Gegenstände vorhanden sind.

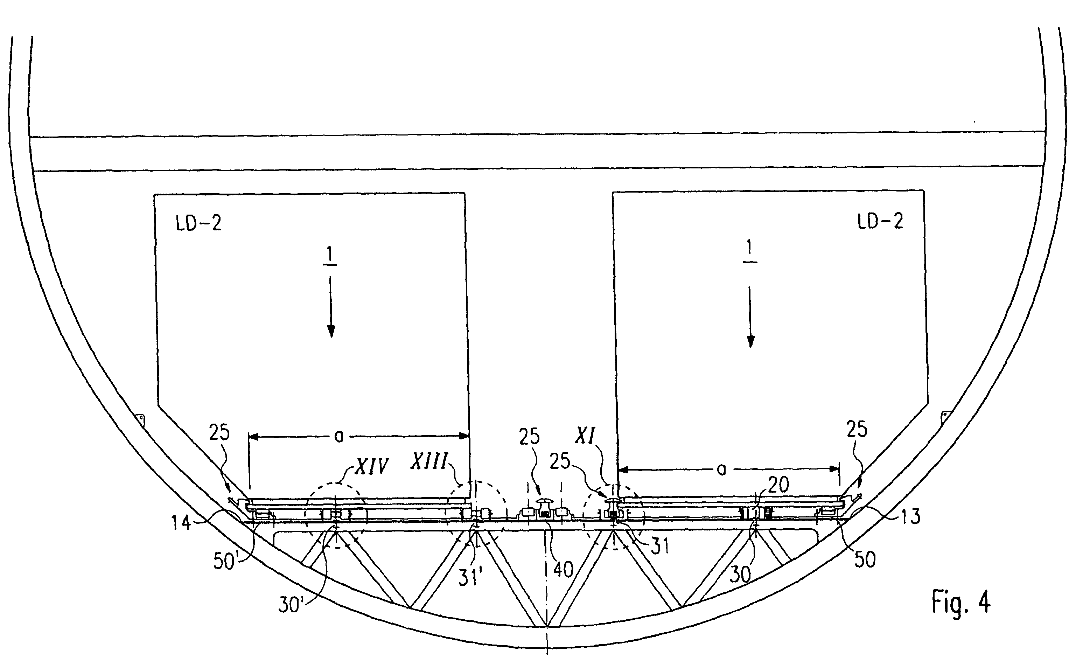

Aus Fig. 4 geht hervor, daß kleinere Behälter 1 auch zwischen den Riegeln 25 in dem Paar von randseitigen Querriegel-Reihen 50, 50' und den Querriegeln 25, die in den inneren Montagebahnen 31, 31' montiert sind, gehalten werden können, da der Abstand zwischen diesen Riegeln 25 dem geringeren Befestigungsabstand a der kleineren Behälter 1 entspricht.

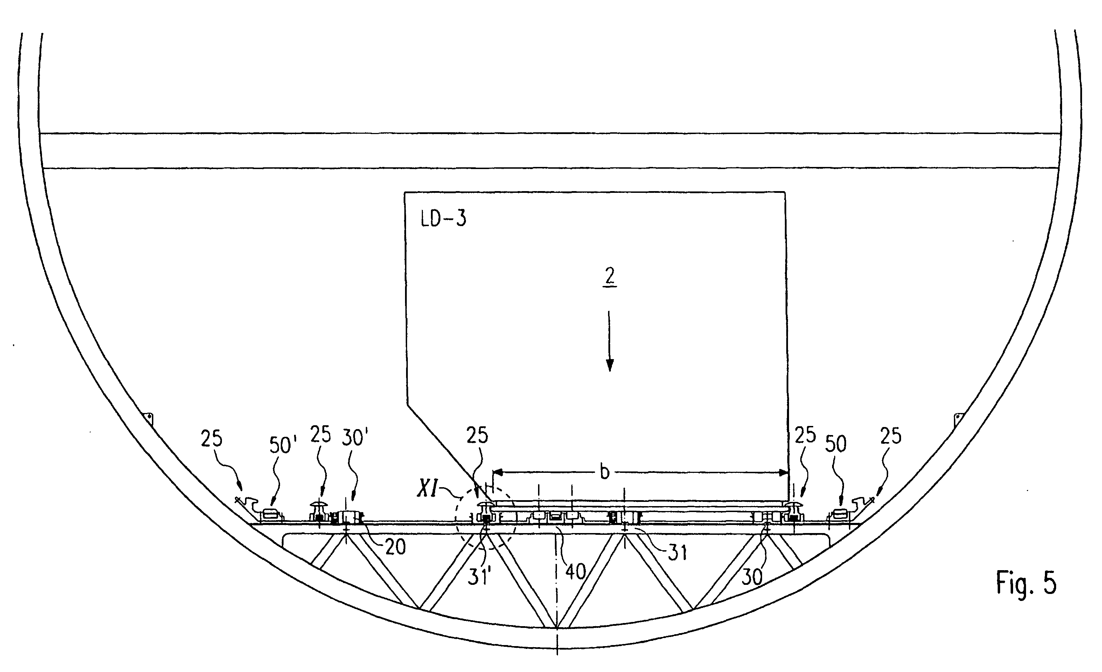

Schließlich zeigt Fig. 5, daß ein größerer Behälter 2 mit seinem größeren Befestigungsabstand b zwischen den äußeren Montagebahnen 30, 30' bzw. den dort montierten Querriegeln 25 und den gegenüber, auf der anderen Seite der mittleren Reihe 40 liegenden inneren Montagebahnen 31' bzw. 31 und den dort montierten Riegeln 25 befestigt werden können. Auch hier ist es wieder (wie bei der Anordnung gemäß Fig. 3) möglich, Container und zwar auch die größeren Container 2 an einem im Flugzeug montierten Hindernis vorbeizuführen.

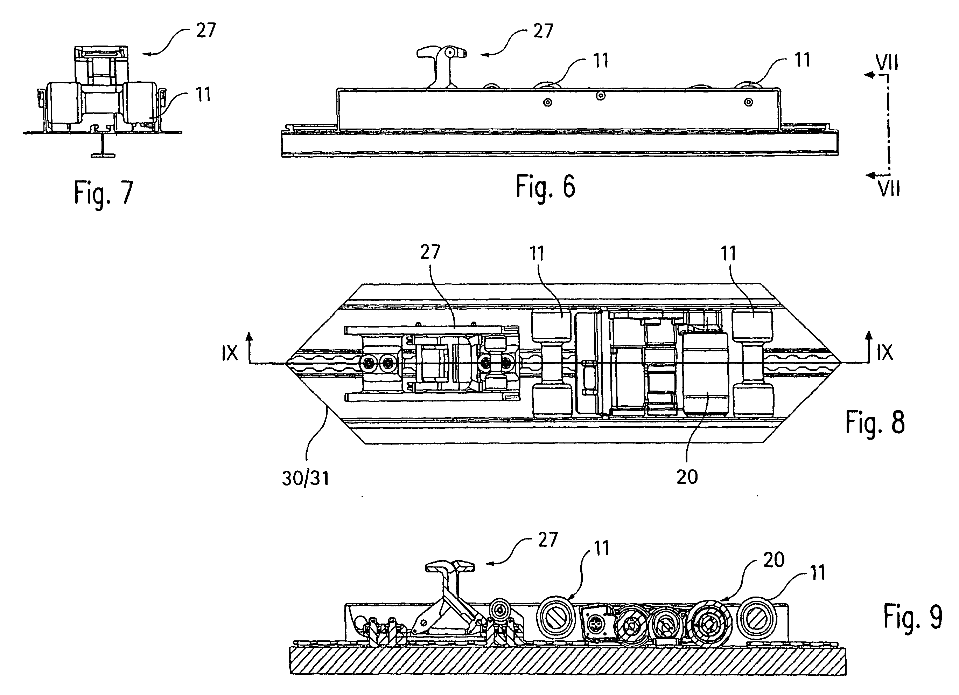

Die Montagebahnen 30, 30', die ausschnittsweise in den Figuren 6-10 gezeigt sind, sind zur Aufnahme von Rollenantriebseinheiten 20, Querriegeln 25 (hier nicht gezeigt) und Längsriegeln 27 ausgebildet. Zusätzlich sind Stützrollen 11 so montiert, dass ein holperfreies Verschieben der Container ermöglicht wird. Die Längsriegel 27 sind hierbei so über die gesamte Länge des Frachtdecks 10 in den Montagebahnen 30, 31; 30', 31' verteilt angeordnet, dass eine maximal dichte Beladung ermöglicht wird. Zu diesem Zweck sind alle, in den Montagebahnen montierbaren Längsriegel 27, Querriegel 25 und Rollenantriebseinheiten 20 sowie Stützrollen 11 in einem Raster (entsprechend den bekannten Sitzschienen) verschiebbar und mit wenigen Handgriffen festsetzbar montiert.

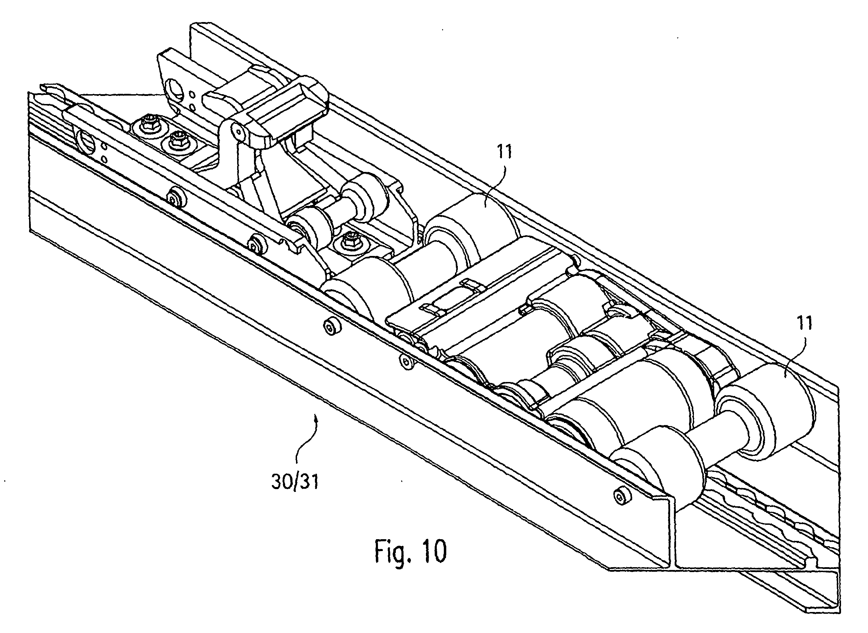

Aus den Figuren 7 und 10 geht besonders klar hervor, daß die Stützrollen 11 in Seitenwangen der Montagebahnen 30, 31 befestigt sind. Die Riegel 27 sind über Schraubbolzen in Lochschienen der Rollenbahnen 30, 31 befestigt, so daß sie sehr leicht auf vorbestimmte Stellen verschoben und dort fixiert werden können.

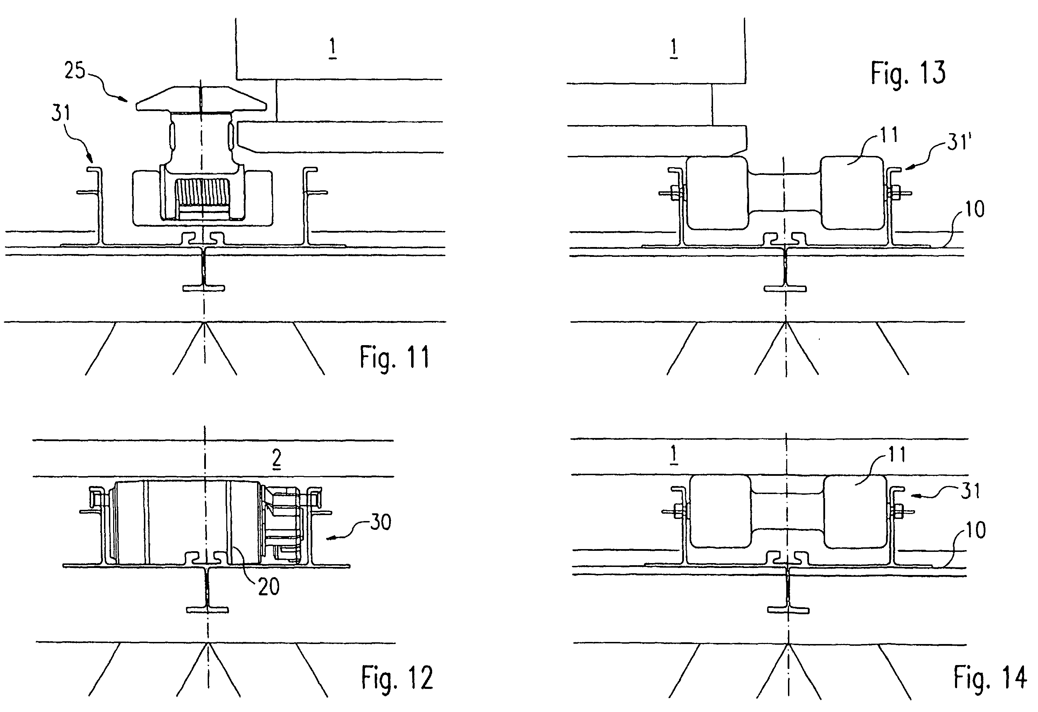

In den Figuren 11-14 ist nochmals genauer der in den Figuren 2-5 beschriebene Sachverhalt gezeigt, wobei in Fig. 11 ein Querriegel 27 einen Behälter 1 verriegelt und in einer inneren Montagebahn 31 montiert ist, wie dies im Ausschnitt der Fig. 8 gezeigt ist. Die Fig. 12 zeigt einen Ausschnitt aus Fig. 2, wobei die dortige Rollenantriebseinheit unter dem Boden eines Kontainers 2 sitzt und in der äußeren Montagebahn 30 montiert ist. Andere derartige Rollenantriebseinheiten 30 sind in den anderen Montagebahnen angebracht.

Die Figuren 13 und 14 zeigen Ausschnitte aus Fig. 4 zur Darstellung, wie Kontainer 1 auf Stützrollen 11 mit Ihren Böden aufliegen und in Montagebahnen 30' bzw. 31' montiert sind.

In Fig. 15 ist nochmals genauer gezeigt, wie Kontainer 1 auf dem Frachtdeck angeordnet werden und wie die Montagebahnen 30, 31; 30', 31' unter ihnen durchlaufen, in denen die zuvor gezeigten Bauelemente, also Stützrollen, Rollenantriebseinheiten, Längs- und Querriegel montiert sind. Die Querriegel 25 der mittleren Reihe 40 sind also nicht in gesonderte Montagebahnen montiert sondern auf dem Frachtdeck 10 befestigt und zwar derart, daß darunterliegende Versteifungen des Frachtdecks miteingebunden sind, um so die Haltestabilität der Querriegel 25 zu erhöhen.

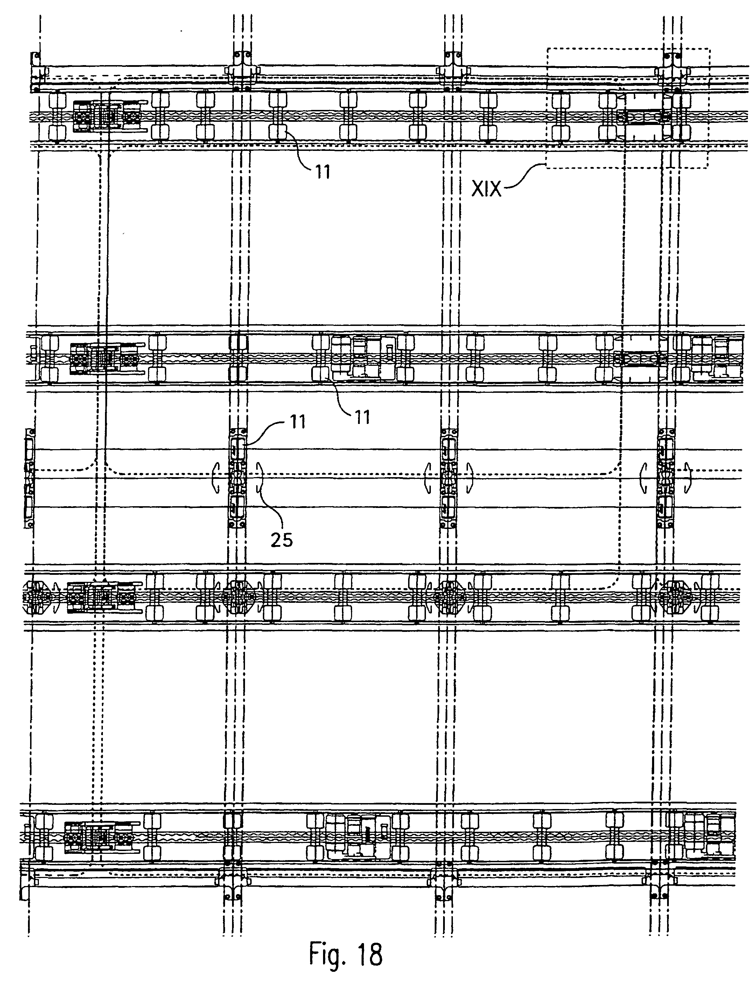

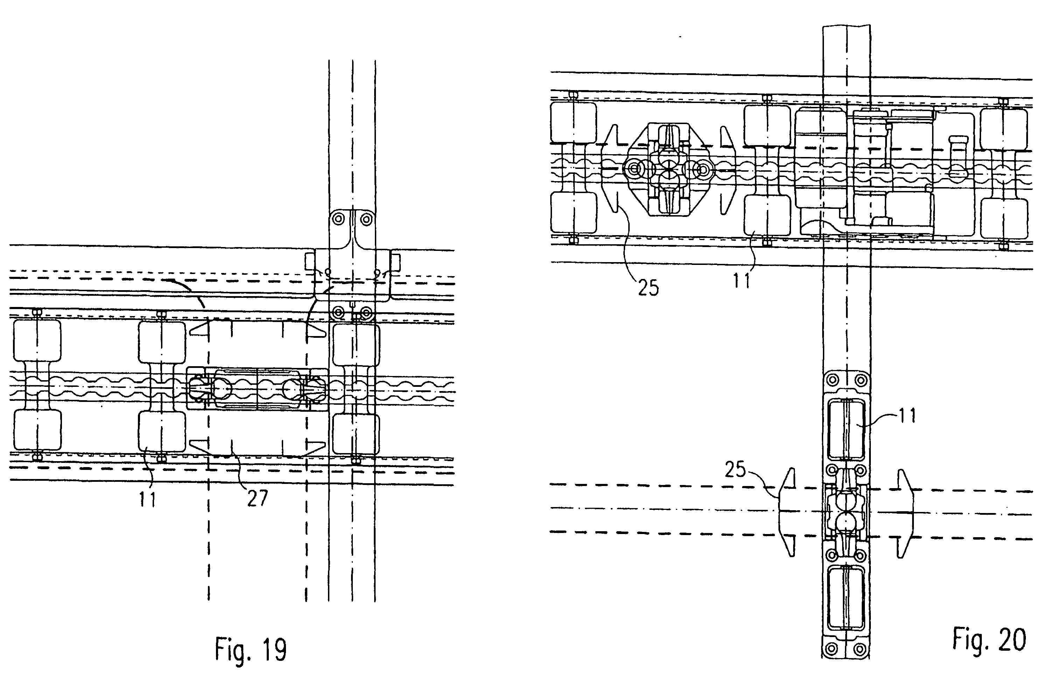

In Fig. 18 ist gezeigt, wie kleinere Behälter positioniert werden können. Die Ausschnittsdarstellungen gemäß Fig. 19 und 20 zeigen, wie ein Längsriegel 27 zwischen zwei Kontainern sitzt, nämlich so, daß seine nach vorne und hinten (in X-Richtung des Frachtdecks gesehen) ragenden Riegelhaken (in Fig. 19 nach unten geklappt) zwei Kontainerränder erfassen können. Die Positionierung der Längsriegel 27 erfolgt hierbei in recht einfacher Weise durch Verschieben innerhalb der Lochschienen der Montagebahnen 30, 30'; 31, 31'.

Fig. 20 zeigt den in Fig. 15 bezeichneten Abschnitt XX in vergrößerter Draufsicht zur Erläuterung der Anordnung von Querriegeln 25 und Rollenantriebseinheiten 20 sowie der mittleren Querriegel 25 mit jeweils daneben sitzenden Stützrollen 11.

Aus obigem geht hervor, dass mit der vorgeschlagenen Anordnung bei leichter und variabler Montage eine optimale Beladung eines Flugzeugs auch dann möglich ist, wenn der Frachtraum einbaubedingte Verengungen aufweist.

### Bezugszeichenliste

- 10: Frachtdeck
- 11: Stützrolle
- 13: erster Rand
- 14: zweiter Rand
- 20: Rollenantriebseinheit
- 25: Querriegel
- 27: Längsriegel
- 30, 30': äußere Montagebahn
- 31, 31': innere Montagebahn
- 40: mittlere Reihe
- 50, 50': randseitige Reihe von Querriegeln

## Patentansprüche

1. Ladesystem für einen Frachtraum eines Flugzeugs zum Beladen eines Frachtdecks (10) mit Paletten, Containern oder dergleichen genormten Frachtbehältern (1, 2),
umfassend
Stützrollen (11) zum Abstützen der Frachtbehälter (1, 2) und Fördern entlang einer Längsachse (X) des Frachtraumes und des Flugzeugs;
Rollenantriebseinheiten (20) zum Antreiben der Frachtbehälter (1, 2);
Querriegel (25) zum Befestigen und Verriegeln der Frachtbehälter (1, 2) quer zur Längsachse (X);
Längsriegel (27) zum Befestigen und Verriegeln von Frachtbehältern (1, 2) in Richtung der Längsachse (X);
zwei Paare von Montagebahnen (30, 31; 30', 31') zum Montieren mindestens von Stützrollen (11) und Querriegeln (25);
eine mittlere Reihe (40) von Querriegeln (25) und
erste und zweite Reihen (50, 50') von randseitigen Querriegeln (25), die an einem ersten (13) bzw. einem gegenüberliegenden zweiten äußeren Rand (14) des Frachtdeckes (10) montierbar sind,
wobei
die Frachtbehälter kleinere Frachtbehälter (1; LD2) mit einem ersten, geringeren Quer-Befestigungsabstand (a) und größere Frachtbehälter (2; LD3) mit einem zweiten, größeren Quer-Befestigungsabstand (b) umfassen,
jeweils ein Paar von Montagebahnen (30, 31; 30', 31') zwischen der mittleren Reihe (40) und der ersten (50) bzw. zwischen der mittleren Reihe (40) und der zweiten Reihe (50) von randseitigen Querriegeln (25) montiert ist und jedes Paar von Montagebahnen (30, 31; 30' 31') eine äußere Montagebahn (30; 30') und eine innere Montagebahn (31, 31') umfasst;
der Abstand zwischen der äußeren Montagebahn (30, 30') jedes Paares mit jeweiligen dort montierten Querriegeln (25) und der mittleren Reihe (40) von Querriegeln (25) dem ersten, geringeren Befestigungsabstand (a) entspricht, und
der Abstand zwischen der äußeren Montagebahn (30, 30') eines Paares mit den jeweiligen dort montierten Querriegeln (25) und der inneren Montagebahn (31, 31')des jeweils anderen Paares mit jeweiligen dort montierten Querriegeln (25) dem zweiten, größeren Quer-Befestigungsabstand (b) entspricht.

2. Ladesystem nach Anspruch 1,
**dadurch gekennzeichnet,**
**dass** die äußeren Montagebahnen (30, 30') zur Montage von randseitigen Querriegeln (25) ausgebildet sind.

3. Ladesystem nach einem der vorhergehenden Ansprüche,
**dadurch gekennzeichnet,**
**daß** der Abstand zwischen jeder Reihe (50, 50') von randseitigen Querriegeln (25) und der jeweils ihr nächstliegenden inneren Montagebahn (31, 31') und den dort montierten Querriegeln (25) dem ersten, geringeren Befestigungsabstand (a) entspricht.

4. Ladesystem nach einem der Ansprüche 1 oder 3,
**dadurch gekennzeichnet**,
da**ß** der Abstand zwischen jeder Reihe (50, 50') von randseitigen Querriegeln (25) und der mittleren Reihe (40) und den dort montierten Querriegeln (25) dem zweiten, größeren Befestigungsabstand (b) entspricht.

5. Ladesystem nach einem der vorhergehenden Ansprüche,
**dadurch gekennzeichnet,**
**dass** der Abstand zwischen jeder Reihe (50, 50') von randseitigen Querriegeln (25) der ersten bzw. zweiten Reihe und der inneren Montagebahn (31, 31'), die dem zweiten (14) bzw. dem ersten (13) äußeren Rand des Frachtdecks näher liegt und den dort montierten Querriegeln (25) dem zweiten, größeren Befestigungsabstand (b) entspricht.

6. Ladesystem nach einem der vorhergehenden Ansprüche,
**dadurch gekennzeichnet,**
**daß** die Montagebahnen (30, 31; 30', 31') zum Einbau von Rollenantriebseinheiten (20) ausgebildet sind.

7. Ladesystem nach einem der vorhergehenden Ansprüche,
**dadurch gekennzeichnet, daß** im Frachtdeck (10) Ausnehmungen zum Einbau von Rollenantriebseinheiten (20) vorgesehen sind.

8. Ladesystem nach einem der vorhergehenden Ansprüchen,
**dadurch gekennzeichnet, daß** die Ausnehmungen zwischen den Montagebahnen (30, 31; 30', 31') der Paare angeordnet sind.

9. Ladesystem nach einem der vorhergehenden Ansprüche,
**dadurch gekennzeichnet,**
**daß** die Montagebahnen (30, 31; 30', 31') zum Montieren von Längsriegeln (27) ausgebildet sind.

10. Ladesystem nach einem der vorhergehenden Ansprüche,
**dadurch gekennzeichnet**,
da**ß** in den Montagebahnen (30, 31; 30', 31') Bremsrollen angebracht sind.

11. Ladesystem nach einem der vorhergehenden Ansprüche,
**dadurch gekennzeichnet,**
**daß** in den Montagebahnen (30, 31, 30', 31') Drainageanordnungen derart angebracht sind, daß Wasser in den Montagebahnen und/oder auf dem Frachtdeck abführbar ist.

## Claims

1. Loading system for a cargo area of an aircraft for loading a cargo deck (10) with pallets, containers or standardized cargo containers (1, 2) of that kind,
comprising
Support rollers (11) for supporting the cargo containers (1, 2) and conveying them along a longitudinal axis (X) of the cargo area and the aircraft;
Roller drive units (20) for driving the cargo containers (1, 2);
Cross latches (25) for attaching and latching the cargo containers (1, 2) transversely to the longitudinal axis (X);
Longitudinal latches (27) for attaching and latching cargo containers (1, 2) in the direction of the longitudinal axis (X);
Two pairs of mounting rails (30, 31; 30', 31') for the mounting at least of support rollers (11) and cross latches (25);
A central row (40) of cross latches (25) and first and second rows (50, 50') of marginal cross latches (25), which can be mounted on a first (13) and an opposing second outer edge (14) of the cargo deck (10),
The cargo containers comprising smaller cargo containers (1; LD2) with a first, smaller transverse attachment spacing (a) and larger cargo containers (2; LD3) with a second, larger transverse attachment spacing (b),
One pair of mounting rails (30, 31; 30', 31') respectively being fitted between the central row (40) and the first row (50) and between the central row (40) and the second row (50) of marginal cross latches (25) and each pair of mounting rails (30, 31; 30', 31') comprising an outer mounting rail (30; 30') and an inner mounting rail (31, 31');
The distance between the outer mounting rail (30, 30') of each pair with cross latches (25) respectively fitted there and the central row (40) of cross latches (25) corresponding to the first, smaller attachment spacing (a), and
The distance between the outer mounting rail (30, 30') of one pair with the cross latches (25) respectively fitted there and the inner mounting rail (31, 31') of the other pair in each case with the cross latches (25) respectively fitted there corresponding to the second, larger transverse attachment spacing (b).

2. Loading system according to claim 1, **characterized in that** the outer mounting rails (30, 30') are formed for the mounting of marginal cross latches (25).

3. Loading system according to one of the preceding claims, **characterized in that** the distance between each row (50, 50') of marginal cross latches (25) and the inner mounting rail (31, 31') lying respectively closest to it and the cross latches (25) fitted there corresponds to the first, smaller attachment spacing (a).

4. Loading system according to one of claims 1 or 3, **characterized in that** the distance between each row (50, 50') of marginal cross latches (25) and the central row (40) and the cross latches (25) fitted there corresponds to the second, larger attachment spacing (b).

5. Loading system according to one of the preceding claims, **characterized in that** the distance between each row (50, 50') of marginal cross latches (25) of the first and second row respectively and the inner mounting rail (31, 31'), which lies closer to the second (14) and the first (13) outer edge respectively of the cargo deck and the cross latches (25) mounted there corresponds to the second, larger attachment spacing (b).

6. Loading system according to one of the preceding claims, **characterized in that** the mounting rails (30, 31; 30', 31') are formed for the installation of roller drive units (20).

7. Loading system according to one of the preceding claims, **characterized in that** recesses are provided in the cargo deck (10) for the installation of roller drive units (20).

8. Loading system according to one of the preceding claims, **characterized in that** the recesses are arranged between the mounting rails (30, 31; 30', 31') of the pairs.

9. Loading system according to one of the preceding claims, **characterized in that** the mounting rails (30, 31; 30', 31') are formed for the mounting of longitudinal latches (27).

10. Loading system according to one of the preceding claims, **characterized in that** brake rollers are fitted in the mounting rails (30, 31; 30', 31').

11. Loading system according to one of the preceding claims, **characterized in that** drainage arrangements are fitted in the mounting rails (30, 31; 30', 31') such that water in the mounting rails and/or on the freight deck can be drained away.

## Revendications

1. Système de chargement pour une soute pour le fret d'un avion pour charger un pont (10) pour le fret avec des palettes, des conteneurs ou des récipients de fret normalisés du même type (1, 2),
comprenant
des rouleaux de support (11) servant à supporter les récipients de fret (1, 2) et à les convoyer le long d'un axe longitudinal (X) de la soute pour le fret et de l'avion;
des unités (20) d'entraînement à rouleaux pour entraîner les récipients à fret (1, 2);
des verrous transversaux (25) pour fixer et verrouiller les récipients à fret (1, 2) transversalement par rapport à l'axe longitudinal (X);
des verrous longitudinaux (27) pour fixer et verrouiller des récipients à fret (1, 2) dans la direction de l'axe de longitudinal (X);
deux paires de voies de montage (30, 31; 30', 31') pour monter au moins deux rouleaux de support (11) et des verrous transversaux (25);
une rangée médiane (40) de verrous transversaux (25) et des première et seconde rangées (50, 50') de verrous transversaux (25) situés du côté du bord et qui peuvent être montés sur un premier bord (13) ou sur un second bord extérieur opposé (14) du pont pour le fret (10),
dans lequel
les récipients à fret comprennent des récipients à fret plus petits (1; LD2) comportant une première distance inférieure de fixation transversale (a) et des récipients à fret plus grands (2; LD3) comportant une seconde distance supérieure de fixation transversale (b),
une paire de voies de montage (30, 31; 30', 31') est montée entre la rangée médiane (40) et la première rangée (50) ou entre la rangée médiane (40) et la seconde rangée (50') de verrous transversaux (25) situés du côté du bord, et chaque paire de voies de montage (30, 31; 30', 31') comprend une voie de montage extérieure (30; 30'), une voie de montage intérieure (31; 31');
la distance entre la voie de montage extérieure (30; 30') et chaque paire comportant des verrous transversaux respectifs (25), qui sont montés sur cette voie, et la rangée médiane (40) de verrous transversaux (25) correspond à la première distance plus faible de fixation (a), et
la distance entre la voie de montage extérieure (30, 30') d'une paire comportant les verrous transversaux respectifs (25), qui sont montés sur cette voie, et la voie de montage (31, 31') de l'autre paire respective comportant des verrous transversaux respectifs (25), qui sont montés sur cette voie, correspond à la seconde distance supérieure de fixation transversale (b).

2. Système de chargement selon la revendication 1, **caractérisé en ce que** les voies extérieures de montage (30, 31' ) sont formées pour le montage de verrous transversaux (25) disposés sur le bord.

3. Système de chargement selon l'une des revendications précédentes, **caractérisé en ce que** la distance entre chaque rangée (50, 50') de verrous transversaux (25) situés du côté du bord et la voie montage intérieure (31, 31'), qui en est respectivement la plus proche, et les verrous transversaux (25) qui y sont montés correspond à la première distance inférieure de fixation (a) .

4. Système de chargement selon l'une des revendications 1 ou 3, **caractérisé en ce que** la distance entre chaque rangée (50, 50') de verrous transversaux (25) situés du côté du bord et la rangée médiane (40) et les verrous transversaux (25), qui y sont montés, correspond à la seconde distance supérieure de fixation (b).

5. Système de chargement selon l'une des revendications précédentes, **caractérisé en ce que** la distance entre chaque rangée (50, 50') de verrous transversaux (25), situés du côté du bord, de la première ou de la seconde rangée, et la voie de montage intérieure (31, 31'), qui est plus proche du second bord extérieur (14) ou du premier bord extérieur (13) du pont pour le fret et les verrous transversaux (25), qui y sont montés, correspond à la seconde distance supérieure de fixation (b).

6. Système de chargement selon l'une des revendications précédentes, **caractérisé en ce que** les voies de montage (30, 31; 30', 31') sont conçues pour le montage d'unités d'entraînement à rouleaux (20).

7. Système de chargement selon l'une des revendications précédentes, **caractérisé en ce que** des évidements pour le montage d'unités d'entraînement à rouleaux (20) sont prévus dans le pont pour le fret (10).

8. Système de chargement selon l'une des revendications précédentes, **caractérisé en ce que** les évidements sont disposés entre les voies de montage (30, 31; 30', 31') des paires.

9. Système de chargement selon l'une des revendications précédentes, **caractérisé en ce que** les voies de montage (30, 31; 30', 31') sont agencées pour le montage de verrous longitudinaux (27).

10. Système de chargement selon l'une des revendications précédentes, **caractérisé en ce que** des rouleaux de freinage sont montés dans les voies de montage (30, 31; 30', 31').

11. Système de chargement selon l'une des revendications précédentes, **caractérisé en ce que** des dispositifs de drainage sont montés dans les voies de montage (30, 31, 30', 31') de telle sorte que de l'eau dans les voies de montage et/ou sur le pont à fret peut être évacuée.
